Europäisches Patentamt

European Patent Office

Office européen des brevets

(19)

(11) Publication number: **0 340 911**

**A1**

## (12) EUROPEAN PATENT APPLICATION

(21) Application number: 89303304.3

(22) Date of filing: 04.04.89

(51) Int. Cl.4: **F16D 25/12 , B60T 13/14**

(30) Priority: 07.04.88 GB 8808106

(43) Date of publication of application:
08.11.89 Bulletin 89/45

(84) Designated Contracting States:
DE FR GB IT

(71) Applicant: LUCAS INDUSTRIES public limited company
Great King Street
Birmingham, B19 2XF West Midlands(GB)

(72) Inventor: Green, Andrew Peter The Chestnuts
Glebe Farm Tur Weston
Nr. Brackley Northants NN13 3JE(GB)

(74) Representative: Makovski, Priscilla Mary et al
BARKER, BRETTELL & DUNCAN 138 Hagley Road
Edgbaston Birmingham B16 9PW(GB)

(54) Improvements in master cylinder and booster assemblies.

(57) In a master cylinder and booster assembly for a vehicle hydraulic system, the booster (2) has a housing (12) provided with a bore (15), an inlet (13) connected to a source of hydraulic pressure and an outlet (14) connected to a booster reservoir, input and boost pistons (16, 19) working in the bore and a boost chamber (23), adapted to be pressurised by fluid from the source under the control of valve means (24), to actuate the boost piston (19) which in turn actuates the master cylinder (1). The booster (2) has a permanent connection (30, 31) between the boost chamber (23) and the outlet (14), and connection means (25, 26) between the source and the boost chamber (23), which is closed when the booster is inoperative, and open during operation, so that the booster (2) is of the closed centre type when it is inoperative, but operates in an open centre mode. The booster also has a feed passage (35) leading from the bore (15) to a reservoir (3) for the master cylinder (1), and an overflow passage (36) leading from the reservoir (3) to the outlet (14), providing a supply of fluid for the reservoir (3) when the booster (2) is operated. The assembly may be a twin assembly for use in agricultural vehicles.

FIG.3.

# IMPROVEMENTS IN MASTER CYLINDER AND BOOSTER ASSEMBLIES

This invention relates to master cylinder and booster assemblies for vehicle hydraulic systems of the kind where the booster has a housing provided with a bore, an inlet for connection to a source of hydraulic pressure, an outlet for connection to a reservoir for fluid, an input member and a boost piston working in the bore, a boost chamber defined in the bore behind the boost piston, pressurisation of the boost chamber by fluid from the source under control of valve means operative in response to an input load applied to the input member acting to advance the boost piston to generate an output load; and where the master cylinder has a housing provided with a bore, and piston means working in the master cylinder bore, and operative in response to the output load from the booster, to pressurise pressure space means to operate fluid-pressure operated means.

In assemblies of the kind set forth, the booster is often of the open centre type, being operated, together with other vehicle services, by a continuous flow of hydraulic fluid from the source, which may be a pump. However, the master cylinder is operated hydrostatically, and require a reservoir of "stagnant" fluid. This may be difficult to provide satisfactorily from the fluid used to operate the booster, which is aerated by its continuous circulation, and so is not suitable for use in a hydrostatic system.

In one known assembly of the kind set forth, shown in G.B.-A-2 121 900, the booster is of the closed centre type when it is inoperative, but operates in an open centre mode. This is achieved by providing a permanent connection between the boost chamber and the outlet, and a connection means between the boost chamber and the pressure source, which is closed when the booster is inoperative, so that the booster can be considered to be closed centre. The connection means comprises a first connection which opens on initial movement of the input member, and a second connection which opens on movement of the boost piston. As a result, at least one connection is always open during operation of the booster, so that it operates as an open centre booster. In operation, there is a low rate of fluid flow in the bore ahead of the servo piston, resulting in low hydrodynamic but high hydrostatic pressure, and a higher fluid flow rate at the outlet, resulting in high hydrodynamic but low hydrostatic pressure. It is possible to take advantage of this to provide a suitable supply for a reservoir for the master cylinder.

According to our invention, in a master cylinder and booster assembly of the kind set forth, the booster has a permanent connection between the boost chamber and the outlet, and a connection means between the boost chamber and the source, the connection means being closed when the booster is inoperative, and open during operation of the booster, and the assembly includes a fluid reservoir for the master cylinder, feed passage means connecting the bore of the booster to the master cylinder reservoir, and overflow passage means connecting the master cylinder reservoir to the booster outlet.

The difference in hydrostatic pressure between the booster bore and the outlet enables flow to take place through the feed and overflow passage means, but aeration of the fluid supplied is reduced as the flow is not continuous, but occurs only when the booster is operated, and because the feed comes from fluid flowing relatively slowly. The master cylinder reservoir is therefore supplied from the booster, and the fluid in the reservoir remains stagnant.

Preferably the feed passage means discharges into the master cylinder reservoir above an outlet port or ports adapted for connection to the master cylinder so that any aerated fluid in the supply travels from the feed to the overflow passage means, and does not affect the outlet port or ports. Conveniently the overflow passage means leads from the tope of the master cylinder reservoir, and the discharge from the feed passage means is adjacent the inlet of the overflow passage means. The feed and overflow passage means may each comprise a single passage.

The booster inlet and outlet may be spaced axially and located at approximately the same circumferential position of the booster bore, with the feed passage means at a circumferential location spaced from the inlet and outlet.

The connection means preferably comprises two connections between the boost chamber and the source, both connections being closed when the booster is inoperative, and at least one being open during operation of the booster.

In an hydraulic braking system for an agricultural vehicle a twin master cylinder and booster assembly may be used. In this case a single master cylinder reservoir supplies both master cylinders. Each booster has a feed passage connecting the bore to the reservoir, and a single overflow passage is provided. The boosters preferably have a common inlet and a common outlet.

An embodiment of our invention is illustrated by way of example in the accompanying drawings, in which:-

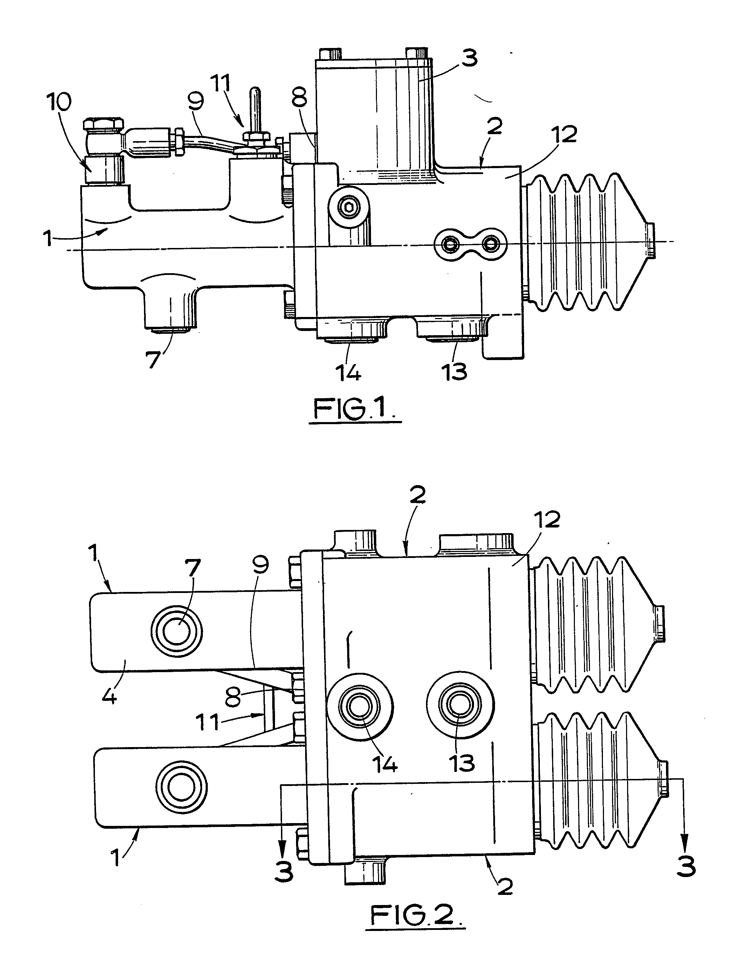

Figure 1 is a side view of a twin master cylinder and booster assembly for a vehicle braking system;

Figure 2 is an underneath view of the assembly of Figure 1;

Figure 3 is a section along the line 3-3 of Figure 2;

Figure 4 is an end view, with part of the master cylinders removed; and

Figure 5 is a top view of the master cylinder reservoir with its cover removed.

The twin master cylinder and booster assembly shown in the drawings is designed for use in an hydraulic braking system for an agricultural vehicle such as a tractor, and comprises a pair of master cylinders 1, a pair of boosters 2, and a single reservoir 3 for the master cylinders 1. Each master cylinder 1 and corresponding booster 2 forms a sub-assembly.

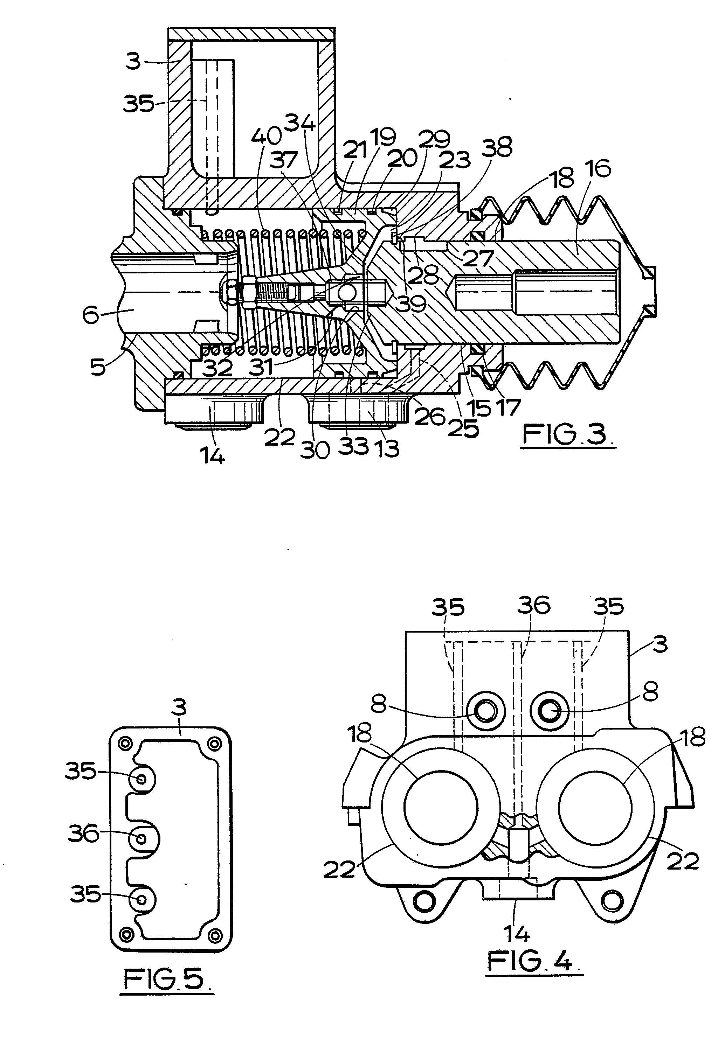

The master cylinders 1 are not shown in detail but are of similar construction, being of the centre valve type. Each has a housing 4 provided with a bore 5 (see Figure 3) in which works a piston 6 operative to pressurise a pressure space connected by an outlet port 7 to one or more vehicle brakes (not shown). The pressure space is connected to an outlet port 8 of the reservoir 3 by a pipe 9 and a recuperation port 10, this connection being controlled by a centre valve (not shown) controlled by the piston 6. The pressure spaces of the master cylinders 1 are interconnected by compensation means 11 of any suitable known type.

The boosters 2 are also similar in construction, being located in a common housing 12 which incorporates the master cylinder reservoir 3, a common inlet 13 for connection to a source of hydraulic pressure such as a pump (not shown) and a common outlet 14 for connection to a booster reservoir (not shown). Each booster 2 has a longitudinal stepped bore 15, with an input piston 16 working through a seal 17 in a bore portion 18 of smaller diameter, and a boost piston 19 carrying spaced seals 20, 21, working in a portion 22 of larger diameter. A boost chamber 23 is defined in the bore 15 behind the boost piston 19, pressurisation of the boost chamber 23 by fluid from the source acting to advance the boost piston 19 to actuate the master cylinder 1. The pressurisation of the boost chamber 23 is controlled by control valve means 24 operated in response to a load applied to the input piston 16.

The source is connected to the boost chamber 23 via the inlet 13 by two separate connection 25,26, both connections being closed when the booster is inoperative. The first connection 25 leads from the inlet 13 to the bore portion 18, and communicates with the boost chamber 23 through a first normally-closed valve comprising an annulus 27 on the input piston 16 co-operating with an annulus 28 on the bore portion 18. The first valve opens when the input piston 16 is advanced. The second connection 26 leads from the inlet 13 to the bore portion 22, and communicates with the boost chamber 23 through a second normally-closed valve comprising an annulus 29 on the boost piston 19 co-operating with the bore portion 22. The second valve opens when the boost piston 19 is advanced. The boost chamber 23 is in permanent communication with the outlet 14 through axial and inclined passages 30, 31 in the boost piston 19, and the bore portion 22.

The control valve means 24 is formed by the first and second valves, together with a flow restricting valve 32 comprising a forward portion 33 of the input piston 16 co-operating with a seat 34 on the boost piston 19 round the passage 30.

The booster also has a feed passage 35 connecting the forward end of the bore portion 22 to the reservoir 3. As best seen in Figure 4, the feed passage 35 leaves the bore portion 22 at a circumferential location spaced from the circumferential location of the inlet 13 and the outlet 14. The feed passage 35 from each booster 2 form feed passage means. Each discharges into the top of the reservoir 3, and the two passages 35 are spaced apart. Overflow passage means, in the form of a single overflow passage 36 is located between them, and leads from the top of the reservoir 3 to the common outlet 14.

In each booster 2 the input piston 16 is biassed by a spring 37 into the retracted position shown, in which a circlip 38 on the piston 16 engages a shoulder 39 in the bore 15. The boost piston 19 is also biased rearwardly by a spring 40.

It will be appreciated that the assembly is of the type where each sub-assembly can be operated separately, or both sub-assemblies can be operated together, and operation of one sub-assembly will now be described.

In operation, a load is applied to the input piston 16 from a pedal (not shown) to advance it against the force in the spring 37, and the forward portion 33 restricts the passage 30. This movement opens the first valve, allowing fluid to flow from the inlet 13 to the booster chamber 23 through the first connection 25. Fluid also flows to the outlet 14, but the restriction of the passage 30 allows pressure to build up in the boost chamber 23. This advances the boost piston 19 against the force in the spring 40, to actuate the master cylinder 1, pressurising the pressure space to apply the brakes. The compensation means 11 close off the connection to the other, non-operated master cylinder 1.

As the boost piston 19 advances the second valve opens to permit fluid flow into the boost chamber 23 through the second connection 26. The input piston 16 advances with the boost piston 19 and may reach a point, after the second valve has opened, at which the first valve closes again. When the reaction force generated by the boost pressure acting on the input piston 16 equals the applied load, the input and boost pistons separate slightly, and the booster is then in its balanced position.

At any point during operation, the total pressure in the booster is constant, but the component hydrodynamic and hydrostatic pressures vary. Thus there is a low rate of fluid flow in the bore portion 22, resulting in low hydrodynamic but high hydrostatic pressure, and a higher flow rate at the outlet 14, resulting in high hydrodynamic but low hydrostatic pressure. The resulting hydrostatic pressure differential allows fluid to flow through the feed passage 35 to the reservoir 3, and through the overflow passage 36 to the outlet 14. This flow tops up the reservoir 3, and although the feed is taken from fluid which is circulated in the booster, the arrangement is such that any aeration of the fluid does not affect the reservoir 3. Firstly, aeration is reduced as the feed is taken from fluid which is flowing relatively slowly, and secondly, flow of fluid in the reservoir 3 only occurs at the top of the reservoir, between the feed and overflow passages, so that aerated fluid coming into the reservoir 3 will tend to be removed by the overflow passage, and will not affect the reservoir outlets 8.

When the input load on the piston 16 is reduced the boost pressure and the spring 37 act to move the input piston 16 rearwardly, opening the valve 32 to allow more flow through passage 30, thus reducing the boost pressure. The boost piston 19 is then moved rearwardly by the spring 40 and the reaction from the master cylinder 1. If the input load is reduced but not removed totally, the booster adopts a new balanced position, otherwise, the parts return to the retracted positions shown.

If both sub-assemblies are operated together, the boosters 2 operate in the same way, with the reservoir 3 fed by both feed passages 35. In this case the compensation means 11 operate to connect the pressure spaces of the master cylinders 1 in order to compensate for differential brake operation.

## Claims

1. A master cylinder and booster assembly for a vehicle hydraulic system, the booster (2) having a housing (12) provided with a bore (15), an inlet (13) connected to a source of hydraulic pressure and an outlet (14) connected to a reservoir for fluid, an imput member (16) and a boost piston (19) working in the bore, a boost chamber (23) defined in the bore (15) behind the boost piston, pressurisation of the boost chamber (23) by fluid from the source under control of valve means (24) operative in response to an input load applied to the input member (16) acting to advance the boost piston (16) to generate an output load, the booster having a permanent connection (30,31) between the boost chamber (23) and teh outlet (14), and connection means (25,26) between the boost chamber (23) and the source, the connection means being closed when the booster is inoperative and open during operation of the booster; and the master cylinder (1) having a housing (4) provided with a bore (5), and piston means (6) working in the master cylinder bore (5) and operative in response to the output load from the booster, to pressurise pressure space means to operate fluid-pressure operated means, characterised in that the assembly includes a fluid reservoir (3) for the master cylinder, feed passage means (35) connecting the bore (15) of the booster to the master cylinder reservoir (3), and overflow passage means (36) connecting the master cylinder reservoir (3) to the booster outlet (14).

2. A master cylinder and booster assembly according to claim 1, in which the feed passage means (35) discharges into the master cylinder reservoir (3) above outlet port means adapted for connection to the master cylinder pressure space means.

3. A master cylinder and booster assembly according to claim 1 or claim 2, in which the overflow passage means (36) leads from the top of the master cylinder reservoir (3).

4. A master cylinder and booster assembly according to any preceding claim, in which the discharge from the feed passage means (35) is adjacent an inlet of the overflow passage means (36).

5. A master cylinder and booster assembly according to any preceding claim, in which the feed and overflow passage means each comprise a single passage (35,36).

6. A master cylinder and booster assembly according to any preceding claim, in which the inlet (13) and outlet (14) are spaced axially and located at substantially the same circumferential position of the booster bore (15), with the feed passage means (35) at a circumferential location spaced from the inlet (13) and outlet (14).

7. A master cylinder and booster assembly according to any preceding claim, in which the connection means comprises two separate connections (25,26) between the boost chamber (23) and the source, both connections being closed when the booster is inoperative, and at least one being open during operation of the booster.

8. A twin master cylinder and booster assembly for a vehicle hydraulic system, each booster (2) having a housing (12) provided with a bore (15), an inlet (13) connected to a source of hydraulic pressure and an outlet (14) connected to a reservoir for fluid, an input member (16) and a boost piston (19) working in the bore, a boost chamber (23) defined in the bore (15) behind the boost piston, pressurisation of the boost chamber (23) by fluid from the source under control of valve means (24) operative in response to an input load applied to the input member (16) acting to advance the boost piston (16) to generate an output load, the booster having a permanent connection (30,31) between the boost chamber (23) and the outlet (14), and connection means (25,26) between the boost chamber (23) and the source, the connection means being closed when the booster is inoperative and open during operation of the booster; and each master cylinder (1) having a housing (4) provided with a bore (5), and piston means (6) working in the master cylinder bore (5) and operative in response to the output load from the booster, to pressurise pressure space means to operate fluid-pressure operated means, characterised in that the assembly includes a single fluid reservoir (3) for the master cylinders (1), feed passage means (35) connecting at least one booster bore (15) to the master cylinder reservoir (3), and overflow passage means (36) connecting the master cylinder reservoir (3) to at least one booster outlet (14).

9. A twin master cylinder and booster assembly accoridng to claim 8, in which the feed passage means (35) comprises a pair of feed passages (35), with one passage connecting each bore (15) to the reservoir (3).

10. A twin master cylinder and booster assembly according to claim 8 or claim 9, in which the overflow passage means comprises a single overflow passage (36).

11. A twin master cylinder and booster assembly according to claim 9 and claim 10, in which the overflow passage (36) is located between the feed passages (35).

12. A twin master cylinder and booster assembly according to any of claims 8 to 11, in which the boosters (2) have a single common inlet (13) and a single common outlet (14).

FIG.1.

FIG.2.

FIG.3.

FIG.5.

FIG.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | GB-A-2 121 900  (LUCAS INDUSTRIES)<br>* Whole document *<br>--- | 1,2,6-9 | F 16 D  25/12<br>B 60 T  13/14 |
| Y | GB-A-2 180 899  (TEVES)<br>* Whole document *<br>--- | 1,2,6-9 | |
| Y | FR-A-2 535 266  (HONDA)<br>* Whole document *<br>----- | 8,9 | |

TECHNICAL FIELDS
SEARCHED (Int. Cl.4)

F 16 D  25/00
B 60 T

The present search report has been drawn up for all claims

| Place of search | Date of completion of the search | Examiner |
|---|---|---|
| THE HAGUE | 18-07-1989 | BALDWIN D.R. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P0401)